(19) Europäisches Patentamt
European Patent Office
Office européen des brevets

(11) **EP 3 757 160 B1**

(12) **EUROPEAN PATENT SPECIFICATION**

(45) Date of publication and mention
of the grant of the patent:
**06.09.2023 Bulletin 2023/36**

(21) Application number: **19757371.0**

(22) Date of filing: **21.02.2019**

(51) International Patent Classification (IPC):
**C08L 9/00** *(2006.01)*     **B60C 1/00** *(2006.01)*
**C08L 7/00** *(2006.01)*     **F16F 1/36** *(2006.01)*

(52) Cooperative Patent Classification (CPC):
(C-Sets available)
**F16F 1/3605; B60C 1/00; C08F 136/06; C08L 7/00;**
F16F 2224/025                              (Cont.)

(86) International application number:
**PCT/JP2019/006461**

(87) International publication number:
**WO 2019/163869 (29.08.2019 Gazette 2019/35)**

(54) **PRODUCTION METHOD FOR VULCANIZED RUBBER COMPOSITION**

HERSTELLUNGSVERFAHREN FÜR VULKANISIERTE KAUTSCHUKZUSAMMENSETZUNG

PROCÉDÉ DE PRODUCTION D'UNE COMPOSITION DE CAOUTCHOUC VULCANISÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2018   JP 2018029115**

(43) Date of publication of application:
**30.12.2020   Bulletin 2020/53**

(73) Proprietor: **Bridgestone Corporation
Chuo-Ku
Tokyo 104-8340 (JP)**

(72) Inventor: **TSUNODA, Katsuhiko
Tokyo 104-8340 (JP)**

(74) Representative: **Marks & Clerk LLP
15 Fetter Lane
London EC4A 1BW (GB)**

(56) References cited:
**EP-A1- 1 241 219          EP-A1- 3 009 471
WO-A1-2014/003052      JP-A- H0 725 212
JP-A- H11 140 230         JP-A- 2012 197 422
US-A- 5 753 365**

• **DATABASE WPI Week 200372 Thomson
Scientific, London, GB; AN 2003-759049
XP002804559, & JP 2003 041063 A (UBE IND LTD)
13 February 2003 (2003-02-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 136/06, C08F 4/70;**
**C08F 136/06, C08F 4/7096;**
**C08L 7/00, C08K 3/04, C08L 9/00**

**Description**

Technical Field

The present invention relates to a production method for a vulcanized rubber composition that contains a rubber component containing a polyisoprene rubber, and a syndiotactic 1,2-polybutadiene.

Background Art

In general, a vulcanized rubber composition for use for production of rubber products such as tires, conveyor belts, anti-vibration rubbers, and seismic isolation rubbers is required to be highly durable. However, dienic rubbers such as a butadiene rubber (BR) and a styrene-butadiene rubber (SBR) that have been heretofore frequently used in the rubber industry are not sufficient in durability against cracking under high strain input, that is, crack growth resistance. In that situation, development of various rubber components and rubber compositions is being made.

As one means for improving crack growth resistance, there is known a method of mixing a polybutadiene rubber that contains a syndiotactic 1,2-polybutadiene (hereinafter may be abbreviated as SPB) in a rubber composition (for example, see PTL 1). However, the crack growth resistance could not be said to be sufficient, and further improvement is desired.

A high-strength gel has become developed by a semi-interpenetrating network structure hydrogel or an interpenetrating network structure hydrogel, that is, a double network gel that is produced by introducing a second monomer component into a network structure formed by polymerizing and crosslinking a first monomer component followed by polymerizing and optionally crosslinking the second monomer, wherein 10 mol% or more of the first monomer component is a charged unsaturated monomer, 60 mol% or more of the second monomer is an electrically-neutral unsaturated monomer, the molar ratio of the first monomer component amount to the second monomer component amount is 1/2 to 1/100, and in the case where the second monomer component is polymerized and crosslinked, the crosslinking degree thereof is set to be smaller than that in the case of polymerizing and crosslinking the first monomer component (for example, see PTL 2). Reference is also made to EP 3009471 A1, which discloses a preparation of an apex/bead composite or assembly as a pre-apexed tire bead.

Citation List

Patent Reference

[0005]

　　　PTL 1: JP 8-85303 A
　　　PTL 2: WO2003/093337

Summary of Invention

Technical Problem

An object of the present invention is to improve crack growth resistance of a vulcanized rubber composition.

Solution to Problem

The present inventor has made assiduous studies for the purpose of solving the above-mentioned problems and, as a result, has hit a technical idea that, by applying a concept of a double network to a vulcanized rubber composition, the crack growth resistance of a vulcanized rubber composition can be greatly improved, and has completed the present invention.

The present invention is as follows.

　　[1] A method for producing a vulcanized rubber composition that contains a rubber component containing a polyisoprene rubber, and a syndiotactic 1,2-polybutadiene, wherein the syndiotactic 1,2-polybutadiene and the polyisoprene rubber are kneaded at a temperature higher by 10 to 100°C than the melting point of the syndiotactic 1,2-polybutadiene, and the resultant unvulcanized rubber composition is vulcanized at a temperature falling within a range of the melting point of the syndiotactic 1,2-polybutadiene ± 15°C.

　　[2] The method for producing a vulcanized rubber composition according to [1], wherein the melting point of the syndiotactic 1,2-polybutadiene is 100 to 180°C.

[3] The method for producing a vulcanized rubber composition according to [1] or [2], which contains the syndiotactic 1,2-polybutadiene in an amount of 2 to 50 parts by mass based on 100 parts by mass of the polyisoprene rubber-containing rubber component.

[4] The method for producing a vulcanized rubber composition according to any of [1] to [3], wherein the polyisoprene rubber is a natural rubber.

[5] The method for producing a vulcanized rubber composition according to any of [1] to [4], wherein the vulcanized rubber composition further contains a filler.

[6] A vulcanized rubber composition produced according to the production method of any of [1] to [5].

[7] A tire using the vulcanized rubber composition of [6].

[8] A rubber product selected from conveyor belts, anti-vibration rubbers, seismic isolation rubbers, rubber crawlers, belts, hoses and fenders, using the vulcanized rubber composition of [6].

Advantageous Effects of Invention

According to the present invention, the crack growth resistance of a vulcanized rubber composition can be greatly improved.

Description of Embodiments

The present invention is a method for producing a vulcanized rubber composition that contains a rubber component containing a polyisoprene rubber, and a syndiotactic 1,2-polybutadiene, wherein the syndiotactic 1,2-polybutadiene and the polyisoprene rubber are kneaded at a temperature higher by 10 to 100°C than the melting point of the syndiotactic 1,2-polybutadiene, and the resultant unvulcanized rubber composition is vulcanized at a temperature falling within a range of the melting point of the syndiotactic 1,2-polybutadiene ± 15°C.

In the present invention, the melting point is measured according to a method of putting a sample of syndiotactic 1,2-polybutadiene in a differential scanning calorimeter (DSC) device and heating it at a heating rate of 10°C/min, in which the melting peak temperature of the DSC curve is referred to as the melting point of the sample.

[Production method for vulcanized rubber composition]

In the production method for a vulcanized rubber composition of the present invention, the temperature in kneading the syndiotactic 1,2-polybutadiene and the polyisoprene rubber (at the master batch kneading stage) is so defined that the kneading temperature is higher by 10 to 100°C than the melting point of the syndiotactic 1,2-polybutadiene, preferably higher by 12 to 50°C so as to completely dissolve the syndiotactic 1,2-polybutadiene in the polyisoprene rubber, and thereafter the resultant unvulcanized rubber composition is vulcanized at around the melting point of the syndiotactic 1,2-polybutadiene to make the syndiotactic 1,2-polybutadiene semi-dissolved in the polyisoprene rubber to be thereby fixed as a network in the polyisoprene, and accordingly, a double network is formed in the vulcanized rubber composition to give a high-strength rubber composition having a significantly improved crack growth resistance. The master batch will be described hereinunder.

The double network in the present invention is a structure where a syndiotactic 1,2-polybutadiene forms a three-dimensional network structure in a polyisoprene rubber matrix, in which the syndiotactic 1,2-polybutadiene network first takes a role of stress in attaining efficient energy dissipation to thereby express improvement in crack growth resistance.

In the production method for a vulcanized rubber composition of the present invention, where the temperature in kneading the syndiotactic 1,2-polybutadiene and the polyisoprene rubber (at the master batch kneading stage) does not reach a temperature higher by 10°C than the melting point of the syndiotactic 1,2-polybutadiene, it would be difficult to completely dissolve the syndiotactic 1,2-polybutadiene in the polyisoprene rubber, and if so, even when the resulting composition is vulcanized at a temperature falling within a range of the melting point ± 15°C, a network structure of a favorable semi-dissolved syndiotactic 1,2-polybutadiene could not be formed.

On the other hand, in the production method for a vulcanized rubber composition of the present invention, where the temperature in kneading the syndiotactic 1,2-polybutadiene and the polyisoprene rubber (at the master batch kneading stage) oversteps a temperature higher by 100°C than the melting point of the syndiotactic 1,2-polybutadiene, the polyisoprene rubber and/or the syndiotactic 1,2-polybutadiene would be thermally degraded and, after all in such a case, the crack growth resistance could hardly be improved.

In the production method for a vulcanized rubber composition of the present invention, a kneading machine such as a Bumbary mixer, a roll or an internal mixer is preferably used.

Regarding the vulcanization temperature for the vulcanized rubber composition of the present invention, the unvulcanized rubber composition needs to be vulcanized at a temperature falling within a range of the melting point of the syndiotactic 1,2-polybutadiene $\pm$ 15°C, preferably at a temperature falling within a range of the melting point of the syndiotactic 1,2-polybutadiene $\pm$ 13°C.

When the vulcanization temperature for the vulcanized rubber composition of the present invention is higher than "the melting point + 15°C" of the syndiotactic 1,2-polybutadiene, the crystal of the syndiotactic 1,2-polybutadiene may again dissolve in the polyisoprene rubber so that the polyisoprene rubber and the syndiotactic 1,2-polybutadiene may be in an amorphous dispersion state and therefore a network of the syndiotactic 1,2-polybutadiene could hardly be formed.

On the other hand, when vulcanization temperature for the vulcanized rubber composition of the present invention is lower than "the melting point - 15°C" of the syndiotactic 1,2-polybutadiene, the syndiotactic 1,2-polybutadiene in the polyisoprene rubber may be in a crystalline state and therefore a network of the syndiotactic 1,2-polybutadiene could hardly be formed.

The temperature in kneading in the production method for a vulcanized rubber composition of the present invention means the temperature of the master batch of the rubber composition in the present invention at the time when the master batch is discharged out of the kneading device, and means the internal temperature of the master batch measured with a temperature sensor or the like just after discharged out of the kneading device. However, in the case where the kneading device employed is equipped with a temperature measuring means for measuring the temperature of the rubber composition inside the device, the temperature of the master batch at the time when it is discharged out may be measured. Here, the master batch means a rubber composition to be produced in a stage of kneading the rubber component and the syndiotactic 1,2-polybutadiene in the kneading stage not as yet mixed with a vulcanizing agent and a vulcanization accelerator.

The temperature in vulcanization in the production method for a vulcanized rubber composition of the present invention means a maximum temperature after start of vulcanization to the end thereof via progress of vulcanization (in general, a preset temperature of the vulcanization device used).

"Vulcanization" as referred to in the present invention is not limited to sulfur crosslinking but includes sulfur-free crosslinking such as peroxide crosslinking.

[Rubber Component]

The rubber component in the vulcanized rubber composition of the present invention contains a polyisoprene rubber. The polyisoprene rubber is one or more selected from a natural rubber and a synthetic polyisoprene rubber, and from the viewpoint of improving fracture resistance characteristics (crack growth resistance), a natural rubber is preferred.

Preferably, the rubber component contains a polyisoprene rubber in an amount of 50% by mass or more, more preferably 60% by mass or more, even more preferably 70% by mass or more, further more preferably 80% by mass or more, and especially preferably the rubber component is 100% by mass polyisoprene rubber.

As needed, the rubber component may contain in addition to the polyisoprene rubber, any other rubber, preferably a conjugated dienic rubber than the polyisoprene rubber therein.

The other conjugated dienic rubber than polyisoprene rubber is preferably at least one dienic rubber selected from a styrene-butadiene copolymer rubber (SBR), a polybutadiene rubber (BR), an acrylonitrile-butadiene copolymer rubber (NBR), a butyl rubber (IIR), a halogenobutyl rubber (e.g., Cl-IIR, Br-IIR), an ethylene-propylene-diene terpolymer (EPDM), an ethylene-butadiene copolymer rubber and a propylene-butadiene copolymer rubber. One alone or two or more kinds of polyisoprene rubber may be used either singly or as a blend thereof.

The rubber component may contain a non-dienic rubber within a range not detracting from the advantageous effects of the present invention.

[Syndiotactic 1,2-polybutadiene]

The melting point of the syndiotactic 1,2-polybutadiene in the present invention is preferably 100 to 180°C, more preferably 110 to 180°C, even more preferably 115 to 180°C.

When the melting point of the syndiotactic 1,2-polybutadiene is 100°C or higher, the vulcanizing temperature of the rubber composition is scarcely higher than a temperature falling within a range of the melting point of the syndiotactic 1,2-polybutadiene $\pm$ 15°C so that the polyisoprene rubber and the syndiotactic 1,2-polybutadiene can be in an amorphous dispersion state and therefore the network of the syndiotactic 1,2-polybutadiene can be readily formed.

On the other hand, when the melting point of the syndiotactic 1,2-polybutadiene is 180°C or lower, rubber scorching (rubber degradation, molecules breakage, gel formation) in kneading the polyisoprene rubber does not occur and the rubber performance does not lower. Further, the vulcanizing temperature of the rubber composition is scarcely lower than a temperature falling within a range of the melting point of the syndiotactic 1,2-polybutadiene $\pm$ 15°C so that the syndiotactic 1,2-polybutadiene in the polyisoprene rubber could hardly be in a crystalline state and therefore the network of the syndiotactic 1,2-polybutadiene can be readily formed.

The syndiotactic 1,2-polybutadiene in the present invention is prepared by polymerizing a 1,3-butadiene monomer in an organic solvent containing an aliphatic solvent using an iron-based catalyst composition or a cobalt-based catalyst composition, and can be prepared, for example, according to the polymerization method described in JP 2000-119325 A, JP 2000-119326 A, JP 2004-528410 A, JP 2005-518467 A, JP 2005-527641 A, JP 2009-108330 A, JP 7-25212 A, JP 6-306207 A, JP 6-199103 A, JP 6-92108 A, and JP 6-87975 A.

Examples of the iron-based catalyst composition include a catalyst composition prepared by mixing (a) an iron-containing compound (b) an $\alpha$-acylphosphonic acid diester, and (c) an organic aluminum compound, a catalyst composition prepared by mixing (a) an iron-containing compound (b) an $\alpha$-acylphosphonic acid diester, (c) an organic aluminum compound, and any other organic metal compound or a Lewis base, and a catalyst composition containing (a) an iron-containing compound (b) dihydrocarbyl hydrogenphosphite, and (c) an organic aluminum compound.

The cobalt-based catalyst composition includes a catalyst system containing a soluble cobalt, for example, cobalt octoate, cobalt 1-naphthenate, or cobalt benzoate, and an organic aluminum compound, for example, trimethyl aluminum, triethyl aluminum, tributyl aluminum, or triphenyl aluminum, and carbon disulfide.

Preferably, the 1,2-bond content in the syndiotactic 1,2-polybutadiene in the present invention is 70% by mass or more, more preferably 80% by mass or more, even more preferably 85% by mass or more, especially more preferably 90% by mass or more.

In the 1,2-bond, preferably, syndiotacticity is 70% by mass or more, more preferably 75% by mass or more, even more preferably 80% by volume or more, further more preferably 85% by mass or more, especially more preferably 90% by mass or more. Syndiotacticity in the present invention represents the syndiotactic structure content in the 1,2-bond.

The syndiotacticity of the 1,2-bond is determined through $^1$H and $^{13}$C nuclear magnetic resonance (NMR) analyses of syndiotactic 1,2-polybutadiene.

The weight-average molecular weight of the syndiotactic 1,2-polybutadiene in the present invention is preferably 100,000 to 600,000, more preferably 120,000 to 600,000, still more preferably 140,000 to 600,000, even more preferably 160,000 to 600,000.

The syndiotacticity of the 1,2-bond in the syndiotactic 1,2-polybutadiene is preferably 60% or more, more preferably 65% or more, even preferably 70% or more, further more preferably 80% or more. This is because, when the syndiotacticity of the 1,2-bond is higher, double network formation is easier.

The degree of crystallinity of the syndiotactic 1,2-polybutadiene is preferably 30 to 80%, more preferably 40 to 80%, even more preferably 45 to 80%.

When the weight-average molecular weight of the syndiotactic 1,2-polybutadiene falls within a range of 100,000 to 600,000, the syndiotacticity of the 1,2-bond is 60% or more, and the degree of crystallinity falls within a range of 30 to 80%, double network formation is easy. With that, crack growth resistance can be improved, and the syndiotactic 1,2-polybutadiene could hardly be a fracture nucleus acting as a foreign substance, and from this point, crack growth resistance can be improved.

[Vulcanized rubber composition]

The vulcanized rubber composition produced in the present invention preferably contains a syndiotactic 1,2-polybutadiene in an amount of 2 to 50 parts by mass based on 100 parts by mass of the rubber component containing a polyisoprene rubber therein, more preferably contains it in an amount of 2 to 50 parts by mass, even more preferably 5 to 50 parts by mass, further more preferably 5 to 30 parts by mass, and especially more preferably 5 to 20 parts by mass.

When the composition contains a syndiotactic 1,2-polybutadiene in an amount of 2 parts by mass or more, double network of the rubber component containing a polyisoprene rubber and the syndiotactic 1,2-polybutadiene can be favorably formed and crack growth resistance can be thereby improved.

On the other hand, when the composition contains a syndiotactic 1,2-polybutadiene in an amount of 50 parts by mass or less, a risk that the syndiotactic 1,2-polybutadiene may act as a foreign substance to be a fracture nucleus can be evaded.

[Filler]

The vulcanized rubber composition produced in the present invention may contain a filler. This is because, when containing a filler, the strength of the vulcanized rubber composition can be high.

As the filler, carbon black or an inorganic filler except carbon black or an organic filler may be contained. One alone or two or more kinds of fillers can be used either singly or as combined.

Preferably, the vulcanized rubber composition of the present invention contains a filler in an amount of 10 to 160 parts by mass based on 100 parts by mass of the rubber component, more preferably in an amount of 15 to 140 parts by mass, even more preferably 15 to 120 parts by mass, and especially more preferably 20 to 120 parts by mass.

[Carbon black]

The carbon black that the vulcanized rubber composition of the present invention can contain is not specifically limited, and for example, an SAF, ISAF, IISAF, N339, HAF, FEF, or GPF class grade carbon black can be used. The nitrogen adsorption specific surface area ($N_2SA$, measured according to JIS K 6217-2:2001) thereof is preferably 20 to 160 $m^2/g$, more preferably 25 to 160 $m^2/g$, even more preferably 25 to 150 $m^2/g$, especially more preferably 30 to 150 $m^2/g$. The dibutyl phthalate oil absorption amount (DBP, measured according to JIS K 6217-4:2008) I preferably 40 to 160 ml/100 g, more preferably 40 to 150 ml/100 g, even more preferably 50 to 150 ml/100 g, further more preferably 60 to 150 ml/100 g, especially more preferably 60 to 140 ml/100 g. One alone or two or more kinds of carbon black may be used either singly or as combined.

The amount, mass% of carbon black in 100% by mass of the filler is, from the viewpoint of improving the strength of the vulcanized rubber composition, preferably 40% by mass or more, more preferably 50% by mass or more, even more preferably 70% by mass or more, especially more preferably 90% by mass or more.

[Inorganic filler except carbon black]

The inorganic filler except carbon black that the vulcanized rubber composition of the present invention can contain is preferably silica. Examples of silica include a wet method silica (hydrous silicic acid), a dry method silica (anhydrous silicic acid), calcium silicate, and aluminum silicate, and among these, a wet method silica is preferred.

Preferably, the BET specific surface area (measured according to ISO 5794/1) of the wet method silica is 40 to 350 $m^2/g$. Silica whose BET specific surface area falls within the range has an advantage capable of satisfying both rubber reinforcing performance and dispersibility in a rubber component. From this viewpoint, silica whose BET specific surface area falls within a range of 80 to 300 $m^2/g$ is more preferred. As such silica, commercial products such as "Nipsil AQ" and "Nipsil KQ" from Tosoh Silica Corporation and "Ultrasil VN3" from Evonik Corporation are usable.

One alone or two or more kinds of silica can be used either singly or as combined.

The other inorganic filler than silica includes aluminum hydroxide and clay.

In the case where silica is used as a filler, a silane coupling agent such as bis(3-triethoxysilylpropyl) polysulfide, bis(3-triethoxysilylpropyl) disulfide and 3-trimethoxysilylpropyl benzothiazyl tetrasulfide is favorably used. The amount of the silane coupling agent to be mixed varies depending on the kind of the silane coupling agent, but is preferably selected from a range of 2 to 20 parts by mass based on 100 parts by mass of silica.

The unvulcanized rubber composition in the present invention may contain, if desired and within a range not detracting from the advantageous effects of the present invention, a blending agent generally used in the rubber industry, for example, a vulcanizing agent, a vulcanization accelerator, a process oil, an antiaging agent, an anti-scorching agent, zinc oxide, and stearic acid.

In the case of sulfur crosslinking, the vulcanizing agent includes a sulfur-containing vulcanizing agent such as sulfur (e.g., powdery sulfur), morpholine disulfide, and a polysulfide compound. Sulfur-free crosslinking includes peroxide crosslinking with tert-butylhydroperoxide, 1,1,3,3-tetramethylbutyl hydroperoxide, cumene hydroperoxide, dicumyl peroxide, di-tert-butyl peroxide, diisopropylbenzene hydroperoxide, tert-butylcumyl peroxide or the like.

[Tire and other rubber products]

The vulcanized rubber composition of the present invention can be favorably used in a broad field of tires and other rubber products. The other rubber products than tires to which the vulcanized rubber composition of the present invention is favorably applied include conveyor belts, anti-vibration rubbers, seismic isolation rubbers, rubber crawlers, belts, hoses and fenders.

Examples

The present invention is described in more detail with reference to Examples and Comparative Examples, but the present invention is not whatsoever restricted by the following Examples.

The melting point and the crack growth resistance of syndiotactic 1,2-polybutadiene were measured according to the methods mentioned below.

<Melting point of syndiotactic 1,2-polybutadiene>

Measured according to the method described in this description.

<Crack growth resistance>

In the center part of a JIS No. 3 test piece, a 0.5-mm crack was made in the lengthwise direction of the test piece, and given repeated fatigue at a strain of 0 to 60% at 60°C, and the frequency of the repeated fatigue was counted until the sample was broken. The result in Comparative Example 1 was referred to as a reference standard of 100, and the results in the other Examples were shown as exponential notation. A larger index value indicates better crack growth resistance. The results are shown in Table 1.

$$\text{Crack growth resistance index} = \{(\text{frequency until breakage of tested sample})/(\text{frequency until breakage of sample in Comparative Example 1})\} \times 100$$

Syndiotactic 1,2-polybutadiene-1 (hereinafter may be abbreviated as "SPB-1") and syndiotactic 1,2-polybutadiene-2 (hereinafter may be abbreviated as "SPB-2") used in Examples were produced as follows.

<Production Example 1> (Production of SPB-1)

A one-L (1,000 cc) glass bottle dried in an oven was sealed up with a self-seal rubber liner and a holed metal cap. The bottle was completely purged with a dry nitrogen gas stream, and then 94 g of hexane and 206 g of a 1,3-butadiene/hexane mixture containing 21.8% by mass of 1,3-butadiene were added thereto. Next, to the bottle, the following catalyst components were added in the numerical order.

(1) Iron(III) 2-ethylhexanoate, 0.045 mmol
(2) 2-Oxo-(2H)-5-butyl-5-ethyl-1,3,2-dioxaphosphorinane, 0.18 mmol, and
(3) Triisobutyl aluminum, 0.59 mmol.

The bottle was stirred in a water bath kept at 80°C for 3 hours. The formed polymerization reaction mixture was a flowable, somewhat cloudy fluid. When cooled to room temperature, the fluid lost the fluidity with precipitation of syndiotactic 1,2-polybutadiene. The polymerization reaction mixture was coagulated with 3 liters of isopropanol containing 2,6-di-tert-butyl-4-methylphenol as an antioxidant. The formed solid was isolated through filtration, and dried under reduced pressure at 60°C to have a constant weight. The yield of the resultant SPB-1 (syndiotactic 1,2-polybutadiene-1) was 41.1 g (percent yield 91%), and the melting point thereof was 150°C. The polymer was analyzed through $^1$H and $^{13}$C nuclear magnetic resonance (NMR), resulting in that the 1,2-bond content therein was 94%, and the syndiotacticity of the 1,2-bond was 80%.
The weight-average molecular weight (Mw) of the syndiotactic 1,2-polybutadiene was 400,000, and the degree of crystallinity thereof was 54%.

<Production Example 2> (Production of SPB-2)

760 cc of dewatered benzene was put into a 2-liter autoclave in which air had been purged away with nitrogen gas, and 74 g of 1,3-butadiene was dissolved therein.

(1) To this, 1 mmol of cobalt octoate (a benzene solution having a concentration of 1 mmol/cc was used) was added,
(2) after 1 minute, 2 mmol of triethyl aluminum (a benzene solution having a concentration of 1 mmol/cc) was added, and stirred,
(2) then, after 1 minute, 2200 mmol of acetone was added.
(4) After 1 minute, 0.6 mmol of carbon disulfide (a benzene solution having a concentration of 0.3 mmol/cc) was added, and stirred at 10°C for 60 minutes to polymerize 1,3-butadiene.

To the resultant syndiotactic 1,2-polybutadiene product liquid, 0.75 g of 2,4-di-tertiary butyl-p-cresol was added. Next, in 1000 cc of methanol, the syndiotactic 1,2-polybutadiene product liquid was added to separate and precipitate the syndiotactic 1,2-polybutadiene therein. The syndiotactic 1,2-polybutadiene was further washed with methanol, and then dried in vacuum. The melting point of the resultant SPB-2 (syndiotactic 1,2-polybutadiene-2) was 120°C, the 1,2-bond content therein was 89%, and the syndiotacticity of 1,2-bond was 73%.
The weight-average molecular weight (Mw), the 1,2-bond content of butadiene, the syndiotacticity of 1,2-bond and the degree of crystallinity were measured as follows.

<Weight-average molecular weight (Mw)>

The weight-average molecular weight was measured through gel permeation chromatography [GPC: HLC-8220/HT from Tosoh Corporation] using a differential refractometer as a detector, and was expressed as a polystyrene-equivalent value based on monodispersed polystyrene. The column used was GMHHR-H(S)HT [from Tosoh Corporation], the eluent was trichlorobenzene, and the measurement temperature was 140°C.

<1,2-Bond content of butadiene, and syndiotacticity of 1,2-bond>

Determined through $^1$H and $^{13}$C nuclear magnetic resonance (NMR) analyses of syndiotactic 1,2-polybutadiene.

<Degree of crystallinity>

The density of 1,2-polybutadiene having a degree of crystallinity of 0% was taken as 0.889 $g/cm^3$, and the density of 1,2-polybutadiene having a degree of crystallinity of 100% was taken as 0.963 $g/cm^3$. The density of the sample to be analyzed was measured according to a collecting gas over water method, and converted into the degree of crystallinity thereof.

Examples 1 to 5, Comparative Examples 1 to 4

According to the mixing formulation, and at the kneading temperature and the vulcanization temperature shown in Table 1, nine types of vulcanized rubber compositions were prepared. The kneading was two-stage kneading of a master batch kneading step without a vulcanizing agent and a vulcanization accelerator, and a final kneading step of mixing the master batch with a vulcanizing agent and a vulcanization accelerator. Here, in master batch kneading, the kneading temperature was the inner temperature of the master batch just after discharged out from the kneading device, as measured with a temperature sensor. For the vulcanization temperature, the highest end-point temperature measured with the thermometer equipped in the vulcanization device.

The crack growth resistance of these nine types of vulcanized rubber compositions was measured according to the method mentioned above. The results are shown in Table 1.

Table 1

| Unit: part by mass | Example | | | | | Comparative Example | | | |
|---|---|---|---|---|---|---|---|---|---|
| | 1 | 2 | 3 | 4 | 5 | 1 | 2 | 3 | 4 |
| Natural Rubber *1 | 100 | 100 | 100 | 100 | 100 | 100 | 100 | 100 | - |
| Rubber except NR *2 | - | - | - | - | - | - | - | - | 100 |
| SPB-1 (melting point 150°C) *3 | 20 | 20 | - | 10 | 40 | - | 20 | 20 | 20 |
| SPB-2 (melting point 120°C) *4 | - | - | 20 | - | - | - | - | - | - |
| Carbon Black HAF *5 | 50 | 50 | 50 | 50 | 50 | 50 | 50 | 50 | 50 |
| Stearic Acid | 2.0 | 2.0 | 2.0 | 2.0 | 2.0 | 2.0 | 2.0 | 2.0 | 2.0 |
| Zinc Oxide | 3.0 | 3.0 | 3.0 | 3.0 | 3.0 | 3.0 | 3.0 | 3.0 | 3.0 |
| Antiaging Agent 6C *6 | 1.0 | 1.0 | 1.0 | 1.0 | 1.0 | 1.0 | 1.0 | 1.0 | 1.0 |
| Antiaging Agent RD *7 | 0.5 | 0.5 | 0.5 | 0.5 | 0.5 | 0.5 | 0.5 | 0.5 | 0.5 |
| Vulcanization Accelerator CZ *8 | 1.5 | 1.5 | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 | 1.5 | 1.5 |
| Kneading Temperature (°C) | 165 | 180 | 165 | 165 | 165 | 155 | 155 | 165 | 165 |
| Vulcanization Temperature (°C) | 160 | 160 | 130 | 160 | 160 | 160 | 160 | 130 | 160 |
| Crack Growth Resistance | 390 | 435 | 450 | 360 | 340 | 100 | 120 | 135 | 83 |

[Notes]

*1: RSS#1
*2: Styrene-butadiene rubber (from JSR Corporation, emulsion polymerization SBR#1500)
*3: Syndiotactic 1,2-polybutadiene produced in Production Example 1
*4: Syndiotactic 1,2-polybutadiene produced in Production Example 2
*5: Carbon black HAF: N330 (trade name "Asahi #70" from Asahi Carbon Co., Ltd.)
*6: N-(1,3-dimethylbutyl)-N'-phenyl-p-phenylenediamine, trade name "Nocrac (registered trademark) 6C, from Ouchi Shinko Chemical Industrial Co., Ltd.
*7: 2,2,4-Trimethyl-1,2-dihydroquinoline polymer (trade name "Nonflex RD" from Seiko Chemical Co., Ltd.)
*8: N-cyclohexyl-2-benzothiazolyl sulfenamide (trade name "Nocceler CZ-G", from Ouchi Shinko Chemical Industrial Co., Ltd.)

As obvious from the results in Table 1, the crack growth resistance of the vulcanized rubber compositions of the present invention of Examples 1 to 5 much improved over that of the vulcanized rubber compositions of Comparative Examples 1 to 4.

Industrial Applicability

The vulcanized rubber composition of the present invention can be favorably used various tires and also for rubber products selected from conveyor belts, anti-vibration rubbers, seismic isolation rubbers, rubber crawlers, belts, hoses and fenders.

## Claims

1. A method for producing a vulcanized rubber composition that comprises a rubber component containing a polyisoprene rubber, and a syndiotactic 1,2-polybutadiene, wherein
   the syndiotactic 1,2-polybutadiene and the polyisoprene rubber are kneaded at a temperature higher by 10 to 100°C than the melting point of the syndiotactic 1,2-polybutadiene, and the resultant unvulcanized rubber composition is vulcanized at a temperature falling within a range of the melting point of the syndiotactic 1,2-polybutadiene $\pm$ 15°C.

2. The method for producing a vulcanized rubber composition according to claim 1, wherein the melting point of the syndiotactic 1,2-polybutadiene is 100 to 180°C.

3. The method for producing a vulcanized rubber composition according to claim 1 or 2, which comprises the syndiotactic 1,2-polybutadiene in an amount of 2 to 50 parts by mass based on 100 parts by mass of the polyisoprene rubber-containing rubber component.

4. The method for producing a vulcanized rubber composition according to any one of claims 1 to 3, wherein the polyisoprene rubber is a natural rubber.

5. The method for producing a vulcanized rubber composition according to any one of claims 1 to 4, wherein the vulcanized rubber composition further comprises a filler.

6. A vulcanized rubber composition produced according to the production method of any one of claims 1 to 5.

7. A tire using the vulcanized rubber composition of claim 6.

8. A rubber product selected from conveyor belts, anti-vibration rubbers, seismic isolation rubbers, rubber crawlers, belts, hoses and fenders, using the vulcanized rubber composition of claim 6.

## Patentansprüche

1. Verfahren zum Herstellen einer vulkanisierten Kautschukzusammensetzung, die eine Kautschukkomponente, die einen Polyisopren-Kautschuk enthält, und ein syndiotaktisches 1,2-Polybutadien umfasst, wobei das syndiotaktische 1,2-Polybutadien und der Polyisopren-Kautschuk bei einer Temperatur, die um 10 bis 100 °C höher ist als der Schmelzpunkt des syndiotaktischen 1,2-Polybutadiens, geknetet werden, und die sich ergebende nicht-vulkanisierte Kautschukzusammensetzung bei einer Temperatur vulkanisiert wird, die in einen Bereich des Schmelzpunktes des syndiotaktischen 1,2-Polybutadiens ± 15 °C fällt.

2. Verfahren zum Herstellen einer vulkanisierten Kautschukzusammensetzung nach Anspruch 1, wobei der Schmelzpunkt des syndiotaktischen 1,2-Polybutadiens 100 bis 180 °C beträgt.

3. Verfahren zum Herstellen einer vulkanisierten Kautschukzusammensetzung nach Anspruch 1 oder 2, die das syndiotaktische 1,2-Polybutadien in einer Menge von 2 bis 50 Masseteilen auf Grundlage von 100 Masseteilen der Polyisopren-Kautschuk enthaltenden Kautschukkomponente umfasst.

4. Verfahren zum Herstellen einer vulkanisierten Kautschukzusammensetzung nach einem der Ansprüche 1 bis 3, wobei der Polyisopren-Kautschuk ein Naturkautschuk ist.

5. Verfahren zum Herstellen einer vulkanisierten Kautschukzusammensetzung nach einem der Ansprüche 1 bis 4, wobei die vulkanisierte Kautschukzusammensetzung ferner einen Füllstoff umfasst.

6. Vulkanisierte Kautschukzusammensetzung, hergestellt nach dem Herstellungsverfahren nach einem der Ansprüche 1 bis 5.

7. Reifen unter Verwendung der vulkanisierten Kautschukzusammensetzung nach Anspruch 6.

8. Gummierzeugnis, ausgewählt aus Förderbändern, schwingungsdämpfenden Gummis, Gummis zur seismischen Isolation, Gummi-Raupenketten, Gurten, Schläuchen und Fendern, unter Verwendung der vulkanisierten Kautschukzusammensetzung nach Anspruch 6.

## Revendications

1. Procédé de production d'une composition de caoutchouc vulcanisé qui comprend un composant de caoutchouc contenant un caoutchouc polyisoprène, et un 1,2-polybutadiène syndiotactique, dans lequel le 1,2-polybutadiène syndiotactique et le caoutchouc de polyisoprène sont malaxés à une température supérieure de 10 à 100 °C au point de fusion du 1,2-polybutadiène syndiotactique, et la composition de caoutchouc non vulcanisé résultante est vulcanisée à une température comprise dans un intervalle du point de fusion du 1,2-polybutadiène syndiotactique ± 15 °C.

2. Procédé de production d'une composition de caoutchouc vulcanisé selon la revendication 1, dans lequel le point de fusion du 1,2-polybutadiène syndiotactique est compris entre 100 et 180 °C.

3. Procédé de production d'une composition de caoutchouc vulcanisé selon la revendication 1 ou 2, qui comprend le 1,2-polybutadiène syndiotactique dans une quantité représentant 2 à 50 parties en masse sur la base de 100 parties en masse du composant de caoutchouc contenant le caoutchouc polyisoprène.

4. Procédé de production d'une composition de caoutchouc vulcanisé selon l'une quelconque des revendications 1 à 3, dans lequel le caoutchouc polyisoprène est un caoutchouc naturel.

5. Procédé de production d'une composition de caoutchouc vulcanisé selon l'une quelconque des revendications 1 à 4, dans lequel la composition de caoutchouc vulcanisé comprend en outre une charge.

6. Composition de caoutchouc vulcanisé produite selon le procédé de production selon l'une quelconque des revendications 1 à 5.

7. Pneumatique utilisant la composition de caoutchouc vulcanisé selon la revendication 6.

8. Produit en caoutchouc sélectionné parmi des bandes transporteuses, des caoutchoucs antivibratoires, des caoutchoucs à isolation sismique, des chenilles en caoutchouc, des ceintures, des tuyaux et des défenses, utilisant la composition de caoutchouc vulcanisé selon la revendication 6.

**EP 3 757 160 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3009471 A1
- JP 8085303 A
- WO 2003093337 A
- JP 2000119325 A
- JP 2000119326 A
- JP 2004528410 A
- JP 2005518467 A
- JP 2005527641 A
- JP 2009108330 A
- JP 7025212 A
- JP 6306207 A
- JP 6199103 A
- JP 6092108 A
- JP 6087975 A